# EUROPÄISCHE PATENTSCHRIFT

(11) **EP 2 875 514 B1**
(45) Veröffentlichungstag und Bekanntmachung des Hinweises auf die Patenterteilung: **27.02.2019**
(21) Anmeldenummer: 13733238.3
(22) Anmeldetag: 19.06.2013
(51) Int. Cl.: H01G 4/228, H01G 2/02, H01G 4/232, H01G 4/12, H01G 4/30, H01G 4/005

(54) **ELEKTRISCHES BAUELEMENT UMFASSEND EIN ANSCHLUSSELEMENT MIT EINEM KUNSTSTOFFKÖRPER**
ELECTRICAL COMPONENT COMPRISING A TERMINAL ELEMENT WITH A PLASTIC BODY
COMPOSANT ÉLECTRIQUE COMPRENANT UN ÉLEMENT DE CONNECTION AVEC UN CORPS EN PLASTIQUE

(30) Priorität: 17.07.2012 DE 102012106425
(43) Veröffentlichungstag der Anmeldung: 27.05.2015
(73) Patentinhaber: TDK Electronics AG, 81671 München (DE)
(72) Erfinder: ENGEL, Günter, 8430 Leibnitz (AT); SCHOSSMANN, Michael, 8530 Deutschlandsberg (AT); KOINI, Markus, 8054 Seiersberg (AT); KONRAD, Jürgen, 8010 Graz (AT); OBERMAIR, Stefan, 8510 Stainz (AT)
(74) Vertreter: Epping - Hermann - Fischer
(86) Internationale Anmeldenummer: PCT/EP2013/062780
(87) Internationale Veröffentlichungsnummer: WO 2014/012732

(56) Entgegenhaltungen:
- GB-A- 2 337 854
- US-A- 4 151 579
- US-A- 4 158 218
- US-A1- 2011 090 665

## Beschreibung

Die Erfindung betrifft ein Bauelement, insbesondere ein kapazitives Bauelement mit einem im Wesentlichen keramischen Bauelementkörper.

Kapazitive Bauelemente können vielfältig eingesetzt werden, beispielsweise im Bereich der Leistungshalbleiter. Halbleiterschalter, wie beispielsweise ein IGBT (Bipolartransistor mit isolierter Gate-Elektrode, englisch "insulated-gate bipolar transistor") oder ein MOSFET (MetallOxid-Halbleiter-Feldeffekttransistor, englisch "metal-oxidesemiconductor field-effect transistor"), erfordern eine Beschaltung mit externen kapazitiven Bauelementen, um hohen Strom- und Spannungsanforderungen zu genügen. Um eine hohe Effizienz dieser Schalter zu erhalten, ist es erforderlich, dass die externen kapazitiven Bauelemente mit möglichst niedriger Induktivität an die Halbleiterschalter angebunden werden; das heißt, dass sie eine kleine Eigeninduktivität haben und nahe an die Halbleiter angebunden werden können. Zudem treten hohe Temperaturen auf, welche einerseits gewünscht sind, da hohe Temperaturen an den aktiven Halbleiterzonen des Bauelements die Effizienz erhöhen, anderseits jedoch die Verbindungstechnik erschweren. Wesentliche Anforderung an das Bauelement ist somit eine hohe Kapazitätsdichte und eine gute Isolationsfähigkeit bei hohen Temperaturen. Folienkondensatoren und Aluminium-Elektrolyt-Kondensatoren scheiden unter diesen Bedingungen auf Grund ihrer technologiebedingten Temperaturbegrenzung aus. Jedoch können auch bekannte Kondensatoren auf Barium-Titanat-Basis diese Anforderungen bisher nicht erfüllen. Der Grund liegt zum Einen im Erfordernis einer hochtemperaturwechselbeständigen Außenkontaktierung und zum Zweiten in den ungünstigen Materialeigenschaften der schlechter werdenden Isolation bei höheren Temperaturen.

Die Außenkontaktierung eines keramischen Kondensator-Bauelements soll mehrere Aufgaben erfüllen: Zum einen soll die Verbindung genügend mechanische Stabilität aufweisen, um das Bauteil fest mit der übrigen elektronischen Schaltungsanordnung (beispielsweise mit einem DCB-Substrat (Substrat mit direkter Kupferbeschichtung, englisch "direct copper bonded board") zu verbinden. Gleichzeitig ist eine solche Anbindung mechanischen Spannungen ausgesetzt, die von elektrostriktiven Kräften im Betrieb und Temperaturwechseln induziert werden können. Temperaturwechsel können umgebungsinduziert oder durch Eigenerwärmung des Bauteiles bei Stromdurchfluss während der Halbleiter-Schaltvorgänge entstehen. Ein weiterer Temperatureintrag kann im Rahmen der Herstellung durch Löt- oder Sinterprozesse entstehen, welcher zwar nur einmalig auftritt, jedoch hinsichtlich der dabei erreichten Temperatur größer ist als die maximal zulässige Arbeitstemperatur.

Metalle mit guter elektrischer Leitfähigkeit, beispielsweise Kupfer oder Silber, eignen sich gut, um die elektrischen Anforderungen und die Temperaturstabilität zu gewährleisten, jedoch bedingen die unterschiedlichen Ausdehnungskoeffizienten von Keramik und Metall, dass mechanische Spannungen am Übergang von keramischen Bauelementkörper und Außenkontaktierung die Lebensdauer solcher Anbindungen negativ beeinflussen. Bisherige Designkompromisse verwenden beispielsweise Metalle mit niedrigeren Ausdehnungskoeffizienten, welche allerdings mit einer schlechteren elektrischen Leitfähigkeit einher gehen. Eine weitere Möglichkeit bietet die Spannungsentlastung durch Verwenden geeigneter Geometrien (beispielsweise in Mäanderform), die jedoch im Widerspruch zur Optimierung der Induktivität stehen und auch einen gewissen Aufwand in der Herstellung bedürfen. Des Weiteren bleibt das Problem der Temperaturbeständigkeit der Verbindung im Betrieb bestehen. Dies kann im Falle einer Lötverbindung mit bleihaltigem Hochtemperaturlot umgangen werden, was auf Grund des Materials (RoHs) und der Zuverlässigkeit immer wieder Gegenstand kontroverser Diskussionen ist.

Die US 4 151 579 A zeigt ein Bauelement, dessen Bauelementkörper mit Anschlusselementen aus einem leitenden Material verbunden ist.

Die US 2011/090665 A1 zeigt ein Bauelement mit Schichtaufbau, dessen externe Anschlüsse mehrschichtig ausgestaltet sein können.

Es stellt sich die Aufgabe, ein Bauelement mit verbesserter Außenkontaktierung bereitzustellen, das insbesondere unempfindlich gegenüber Temperaturwechseln ist.

Diese Aufgabe wird durch ein Bauelement mit den Merkmalen des Patentanspruchs 1 gelöst, der gerichtet ist auf ein Bauelement umfassend einen Bauelementkörper und zumindest ein Anschlusselement mit einem Kunststoffkörper, das über eine Metallschicht mit dem Bauelementkörper verbunden ist. Die Verbindung muss nicht direkt erfolgen, sondern es können weitere Schichten bei der Verbindung zwischen Kunststoffkörper und dem eigentlichen Bauelementkörper vorgesehen sein.

Die Grundidee ist, die mechanischen und elektrischen Anforderungen an die Außenkontaktierung voneinander zu entkoppeln, um die jeweiligen Vorteile der Materialien, die entweder auf die elektrische oder die mechanische Kopplung von Bauelementskörper und Anschlusselement gerichtet sind, auszunutzen und durch deren Kombinationen eine zuverlässige Kontaktierung zu erhalten, die einerseits den thermischen Belastungen und den damit verbundenen Spannungen im Kontaktbereich als auch den elektrischen Anforderungen - geringe Induktivität und hohe Stromtragfähigkeit durch niedrigen Serienwiderstand - genügt.

Die mechanischen Anforderungen werden im Wesentlichen durch den Kunststoffkörper des Anschlusselements erfüllt, welcher auf Grund seiner Flexibilität den thermischen und damit einhergehenden mechanischen Beanspruchungen unempfindlich ist. Die Metallschicht, die zwischen dem Kunststoffkörper und dem Bauelementkörper vorgesehen ist, ist hinsichtlich ihrer elektrischen Eigenschaften optimiert. Sie umfasst oder besteht aus beispielsweise Silber oder anderen Metallen mit guten elektrischen Eigenschaften, insbesondere guter Leitfähigkeit.

In einer ersten Ausgestaltung ist der Kunststoffkörper, welcher die Form des Anschlusselements im Wesentlichen ausmacht, als ein Winkel geformt, das heißt er hat einen ersten Teil, der benachbart zum Bauelementkörper angeordnet ist, und einen zweiten Teil, der sich winkelig zum ersten Teil erstreckt. Der erste Teil ermöglicht eine großflächige und sichere Kontaktierung des Bauelementkörpers. Der zweite Teil dient zur Kontaktierung des Bauelements und kann beispielsweise mit einem Substrat verbunden werden. Wenn der Winkel zwischen dem ersten und dem zweiten Teil des Kunststoffkörpers im Wesentlichen 90° beträgt, lässt sich das Bauelement in stabiler Lage positionieren, da das Bauelement sicher auf dem zweiten Teil aufgesetzt und in dieser Position montiert werden kann. Der Winkel wird zwischen den Schnittpunkten der Richtungen bestimmt, in denen sich der Querschnitt des ersten und des zweiten Teils erstrecken.

In einer Ausgestaltung weist der Kunststoffkörper eine Metallisierung auf zumindest Teilbereichen seiner Außenseite, das heißt seines Äußeren, auf. Diese Metallisierung ist eine dünne, leitende Schicht, deren Dicke geringer ist als die der Metallschicht, welche den Bauelementkörper und das Anschlusselement verbindet. Die Dicke beträgt beispielsweise 75 bis 150 µm, bevorzugt 100 bis 125 µm. Eine solche Metallisierung kann beispielsweise Kupfer umfassen oder aus Kupfer bestehen. Auf einer solchen Kupferschicht (Dicke 75 bis 150 µm, bevorzugt 100 bis 125 µm) ist vorteilhafterweise eine dünne Silberschicht aufgebracht, deren Dicke 2 bis 6 µm, bevorzugt 3 bis 5 µm beträgt. Vorteilhafterweise verläuft diese Metallisierung zu und/oder unterhalb der Metallschicht, sodass eine elektrische Kontaktierung des Bauelementkörpers über die Metallschicht und entlang des Kunststoffköpers ermöglicht wird. Es ist natürlich auch denkbar, dass der gesamte Kunststoffkörper metallisiert ist, was mit einer vereinfachten Herstellung und guten Stromleitfähigkeit einhergeht. Die Metallisierung auf dem Kunststoffkörper erlaubt die Zuführung von Strom und Spannung entlang des Kunststoffkörpers zur Metallschicht, und über diese zum Bauelementkörper.

In einer Ausgestaltung ist eine Anschlussfläche auf dem zweiten Teil des Kunststoffkörpers vorgesehen, die elektrisch leitend mit der Metallschicht verbunden ist. Diese Anschlussfläche kann zum Beispiel als Sinterschicht auf der Metallisierung aufgebracht sein. Diese Anschlussfläche kann beispielsweise durch Löten mit einer Leiterplatte oder einem Substrat bei der Montage des Bauteils verbunden werden. In einer Ausführung ist die Sinterschicht auf einer Nickel-Gold-Palladium-Schicht aufgebracht, wobei die Nickel-Gold-Palladium-Schicht auch den gesamten Kunststoffkörper beschichten kann. Die Nickel-Gold-Palladium-Schicht mit guten elektrischen Eigenschaften kann in Dünnschichttechnik aufgebracht sein.

In einer Ausgestaltung umfasst der Kunststoffkörper ein Material aus der Gruppe Polyester-Ether-Keton (PEEK) oder Poly-Imid, welche gute mechanische Eigenschaften haben. Das Material für den Kunststoffkörper ist temperaturbeständig und flexibel, um die mechanischen Belastungen im Betrieb aufzufangen und auszuhalten.

In einer Ausgestaltung umfasst die Metallschicht gesintertes Silber. Sintern ist ein Verfahren zur Herstellung von WerkStoffen. Dabei werden feinkörnige, keramische oder metallische Stoffe - meist unter erhöhtem Druck - auf Temperaturen unterhalb deren Schmelztemperaturen erhitzt. Eine derartige Metallschicht kann bei Temperaturen von ungefähr 250 °C oder darunter gesintert werden. Sie ist hitzebeständig und schmilzt später weder beim Löten noch während des Betriebs. Alternativ können auch andere Materialien durch einen Sinterprozess aufgebracht werden. Die Anschlussfläche kann aus demselben Material während desselben Herstellungsschritts gefertigt werden wie die Metallschicht. Die Verbindung zwischen der Sinterschicht am Anschlusselement mit dem Bauelementkörper kann durch Löten erfolgen.

In einer Ausgestaltung hat die Metallschicht eine bandförmige, langgestreckte Geometrie mit einem Breite-zu-Dicke-Verhältnis größer als 6, insbesondere größer als 30. Die Form und Größe kann im Wesentlichen der zu kontaktierenden Seite des Bauelementkörpers entsprechen. Diese flache Geometrie der Leiterbahn wirkt sich bei der Kontaktierung besonders vorteilhaft auf das induktive Verhalten des Bauelements aus.

In einer Ausgestaltung ist die Metallschicht zwischen einer Sputter- oder einer Einbrandschicht auf dem Bauelementkörper und der Metallisierung auf dem Kunststoffkörper angeordnet. Die Sputter- oder Einbrandschicht ist mit Innenelektroden im Inneren des Bauelementkörpers verbunden. Vorteilhafterweise ist ein solcher Bauelementkörper ein Kondensatorkörper mit keramischen dielektrischen Schichten und Innenelektroden. Die dielektrischen Schichten können beispielsweise ein antiferroelektrisches Perovskit umfassen. Die Verwendung dieses Materials beispielsweise mit Kupferinnenelektroden löst das Problem hoher Leckströme in Bariumtitanat(BaTiO3)-basierten Systemen bei hohen Temperaturen, wie sie in der Leistungselektronik üblich sind.

Bei einer Ausgestaltung ist der Bauelementkörper quaderförmig mit zwei winkelförmigen Anschlusselementen an gegenüberliegenden Seiten des Bauelementkörpers. Dies ist eine kompakte und doch stabile Anordnung. Diese Ausführung erlaubt eine geringe Baugröße, die mit der guten Widerstandsfähigkeit der Keramik und der sicheren Anbindung der Anschlusselemente auch bei hohen Temperaturen der Integrierbarkeit des Bauelements in einem Halbleitermodul zu Gute kommt.

Weitere vorteilhafte Ausgestaltungen der Erfindung sind in den untergeordneten Patentansprüchen angegeben.

Nachfolgend wird die Erfindung unter Bezugnahme auf die Zeichnung anhand von Ausführungsbeispielen erklärt.

Es zeigen:
- Figur 1: ein Ausführungsbeispiel eines kapazitiven Bauelements,
- Figur 2: einen Querschnitt durch ein Ausführungsbeispiel eines Bauelementkörpers des Bauelements,
- Figur 3: einen Querschnitt durch ein weiteres Ausführungsbeispiel des Bauelementkörpers des Bauelements und
- Figur 4: eine Detailansicht der Verbindung zwischen dem Anschlusselement und dem Bauelementkörper des Bauelements.

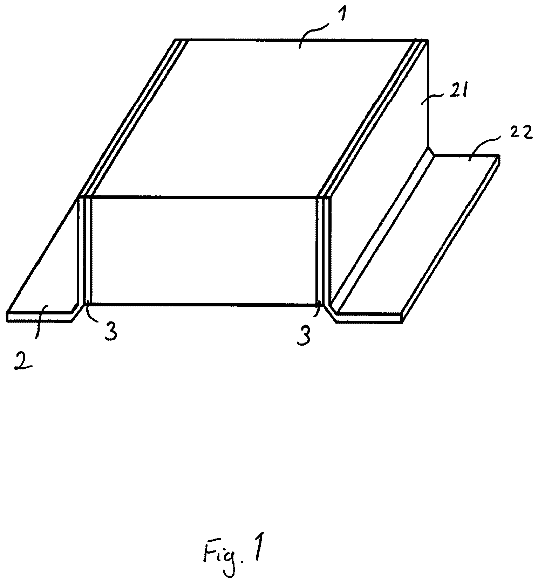

Figur 1 zeigt ein kapazitives Bauelement mit einem quaderförmigen keramischen Bauelementkörper 1. Dessen Abmessungen können beispielsweise 7 x 7 x 2,5 mm betragen. Auch 7,5 x 7,5 x 3,5 mm sind denkbare Abmessungen. Die verwendete Keramik kann beispielsweise eine antiferroelektrische Blei-Lanthan-Zirkonium-Titanat(PLZT)-Keramik sein.

An gegenüberliegenden Seiten des Bauelementkörpers 1 sind Anschlusselemente 2 vorgesehen, die als Winkel mit einem ersten und einem zweiten Teil 21, 22 geformt sind. Die Abschlusselemente 2 haben jeweils einen Kunststoffkörper 23, dessen Form der Form der Anschlusselemente 2 entspricht. Die Anschlusselemente 2 halten den Bauelementkörper 1 und erlauben das Anlegen der Betriebspannungen und -ströme an das Bauelement. Die ersten Teile 21 sind benachbart zu Seitenflächen des Bauelementkörpers 1 angeordnet und mit diesen Seitenflächen über eine Metallschicht 3 verbunden. Die zweiten Teile 22 erstrecken sich im Wesentlichen im rechten Winkel zu den ersten Teilen 21 und erlauben eine Kontaktierung des Bauelements, beispielsweise durch SMD-Kontaktierung. Die Maße des Anschlusselements 2 orientieren sich an denen des Bauelementkörpers 1. Basierend auf obigen Beispielen beträgt die Breite 7 bis 7,5 mm. Die Höhe beträgt 2,5 bis 3,5 mm.

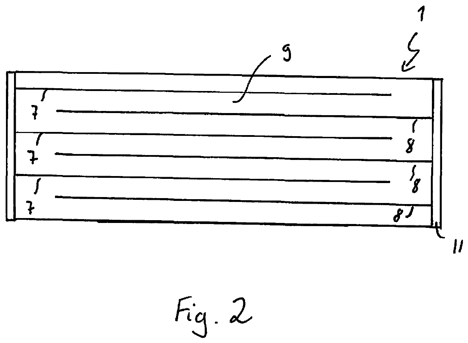

Figur 2 zeigt einen Querschnitt durch ein Ausführungsbeispiel des Bauelementkörpers 1 des Bauelements.

Der Bauelementkörper 1 ist in Vielschichtbauweise aufgebaut und kann beispielsweise gesputtert sein. Er umfasst keramische dielektrische Schichten 9, zwischen denen erste und zweite Innenelektroden 7, 8, beispielsweise aus Kupfer, alternierend angeordnet sind. Die Stapelrichtung verläuft in Richtung der Höhe des Bauelementkörpers 1. Die ersten Innenelektroden 7 erstrecken sich bis zu einer Außenseite und sind dort durch eine Sputter- oder Einbrandschicht 11, die als Anschlussfläche dient, elektrisch verbunden. Die zweiten Innenelektroden 8 erstrecken sich bis zur gegenüberliegenden Außenseite und sind dort durch eine Sputter- oder Einbrandschicht 11, die als Anschlussfläche dient, elektrisch verbunden. Der Bauelementkörper 1 kann monolithisch ausgebaut oder aus mehreren, kaskadierten, Einzelkeramiken bestehen. Im Betrieb wird eine Spannung zwischen den Anschlussflächen angelegt, welche über die Anschlusselemente 2 zugeführt wird.

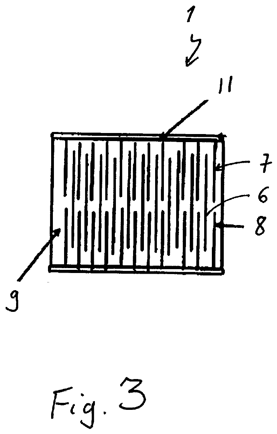

Figur 3 zeigt einen Querschnitt durch ein weiteres Ausführungsbeispiel des Bauelementkörpers 1 des Bauelements.

Der Bauelementkörper 1 unterscheidet sich hinsichtlich der Innenelektrodenanordnung vom vorherigen Ausführungsbeispiel. Erste Innenelektroden 7 erstrecken sich bis zu einer Außenseite und sind dort durch eine Sputter- oder Einbrandschicht 11, die als Anschlussfläche dient, elektrisch verbunden. Zweite Innenelektroden 8 erstrecken sich bis zur gegenüberliegenden Außenseite und sind dort durch eine Sputter- oder Einbrandschicht 11, die als Anschlussfläche dient, elektrisch verbunden. Benachbarte erste und zweite Innenelektroden sind in einer selben Ebene von einander beabstandet angeordnet. Zwischen diesen Ebenen sind dritte, so genannte vergrabene Innenelektroden 6 angeordnet, welche nicht mit den Anschlussflächen verbunden sind. Ein elektrisches Feld oder ein Stromfluss bildet sich im Wesentlichen in Stapelrichtung. Das Design dieser Innenelektrodenanordnung entspricht einer inneren Serienschaltung.

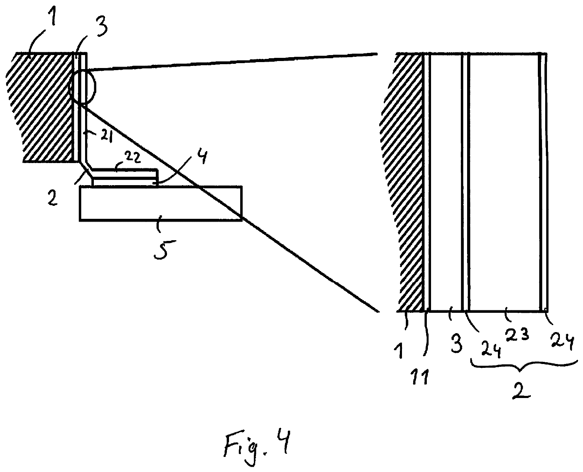

Figur 4 zeigt eine Detailansicht der Verbindungsstelle zwischen dem keramischen Bauelementkörper 1 und dem Anschlusselement 2.

Das Anschlusselement 2 hat einen Kunststoffkörper 23, der die Form des Anschlusselements 2 bestimmt. Das Material für den Kunststoffkörper 23 ist ein hitzebeständiger flexibler Kunststoff, oder umgangssprachlich Plastik, insbesondere ein hitzebeständiges flexibles Polymer und kann beispielsweise Polyester-Ether-Keton (PEEK) oder Poly-Imid umfassen. Der Kunststoffkörper 23 ist so flexibel, dass die mechanischen Belastungen im Betrieb nicht zum Materialbruch führen.

Das Anschlusselement 2 weist ferner eine auf den Kunststoffkörper 23 aufgebrachte Metallisierung 24, beispielsweise aus Kupfer und Silber, auf. Diese Metallisierung 24 kann strukturiert, beispielsweise leiterbahnförmig, oder (groß-)flächig, beispielsweise von der Unterseite zur dem Bauelementkörper 1 zugewandten Seite des Kunststoffkörpers 23 verlaufend, oder ganzflächig das Äußere des Kunststoffkörpers 23 bedeckend sein. Insbesondere in Bereichen jenseits der Metallschicht 3, beispielsweise auf der vom Bauelementkörper 1 abgewandten Seite des Anschlusselements 2, ist das Vorsehen der Metallisierung 24 optional.

Zwischen der Metallisierung 24 und der Einbrand- oder Sputterschicht 11 ist die Metallschicht 3 vorgesehen. Dies kann beispielsweise eine gesinterte Silberschicht sein. Die Silberschicht kann entweder auf den Bauelementköper 1 oder das Anschlusselement 2 gesintert worden sein und anschließend mit anderen Teilen des Bauelements, beispielsweise durch Löten, verbunden werden. Alternativ kann die Verbindung auch durch den Sinterprozess erfolgen. Die Silberschicht hat eine gute Stromleitfähigkeit mit geringem Widerstand. Zudem ist sie temperaturbeständig und schmilzt weder während des Lötens noch bei betriebsbedingten Temperaturschwankungen.

Die Metallschicht 3 weist eine derartige Stromtragfähigkeit auf, dass deren Beitrag zum elektrischen Gesamtserienwiderstand kleiner als derjenige des keramischen Bauelementkörpers 1 ist. Vorzugsweise hat sie daher einen Querschnitt, der größer ist als der Gesamtquerschnitt der Innenelektroden, welcher ungefähr 1 mm² beträgt. Der Gesamtquerschnitt der Innenelektroden ist die Querschnittsfläche entweder der ersten oder der zweiten Innenelektroden 7, 8 bei einem Schnitt parallel zur Sputter- oder Einbrandschicht 11. Die Metallschicht 3 hat eine flache bandförmige und langgestreckte Geometrie, deren Verhältnis von Breite zu Dicke größer als 6 und besonders vorteilhafterweise größer als 30 ist. Die Dicke ist die Ausdehnung der Metallschicht 3 zwischen Metallisierung 24 und Sputterschicht 11. Die Breite wird entlang der Längsausdehnung des Anschlusselements 2, das heißt in die Zeichnungen hinein laufend, bestimmt.

Die Kontaktierung oder Außenterminierung des Bauelementkörpers 1 durch die geschilderte mehrschichtige Anbindung kombiniert mechanische Festigkeit und elektrische Stromtragfähigkeit durch Verwendung verschiedener Materialien, die jeweils auf einen dieser Aspekte gerichtet sind. Dadurch werden die Vorteile der Materialien mit mechanischer Compliance, das heißt mechanischer Nachgiebigkeit, und elektrisch favorisierten Eigenschaften miteinander kombiniert.

Die Kontaktierung des gesamten Bauelements 2 auf einem DCB-Substrat oder einem anderen Leistungsmodulsubstrat erfolgt an der Unterseite des zweiten Teils 22 des Anschlusselements 2. Eine zu diesem Zweck vorgesehene Anschlussfläche 4 kann beispielsweise in Dünnschichttechnik aufgebrachte Nickel-Gold-Palladium-Schicht sein, auf die einer gesinterten Silberschicht an der Unterseite des zweiten Teils 22 aufgebracht sein kann. Eine Anschlussfläche 4 aus Nickel-Gold-Palladium ist auch lötbar.

Die Kontaktierung kann beispielsweise mittels Lot in einem SMD-Montageprozess erfolgen.

Denkbare Kenndaten eines kapazitiven Bauelements sind eine optimale und maximale Betriebspannung Vop = 380 V beziehungsweise VDCmax = 560 V. Die Kapazität kann bei der optimalen Betriebsspannung zwischen 0,5 bis 1 µF betragen.

Der Strom beträgt 3 A_rms bei 200 kHz und einem Temperaturanstieg von 40 °C. Die Lebensdauer kann mehr als 100000 Stunden bei 105 °C/Vop oder mehr als 20000 Stunden bei 125 °C/Vop betragen.

Es sei bemerkt, dass Ausführungsbeispiele denkbar sind, die andere Kombinationen der beschriebenen Merkmale aufweisen.

### Bezugszeichenliste

- 1: Bauelementkörper
- 11: Einbrand- oder Sinterschicht
- 2: Anschlusselement
- 21: erster Teil
- 22: zweiter Teil
- 23: Kunststoffkörper
- 24: Metallisierung
- 4: Anschlussfläche
- 5: Substrat
- 6: Innenelektroden
- 7: Innenelektroden
- 8: Innenelektroden
- 9: dielektrische Schicht

## Patentansprüche

1. Kapazitives Bauelement umfassend einen Bauelementkörper (1) und zumindest ein Anschlusselement (2) mit einem Kunststoffkörper (23), das über eine Metallschicht (3) mit dem Bauelementkörper (1) verbunden ist.

2. Bauelement nach Anspruch 1,
wobei der Kunststoffkörper (23) einen ersten Teil (21), der benachbart zum Bauelementkörper (1) angeordnet ist, und einen zweiten Teil (22), der sich winkelig zum ersten Teil (21) erstreckt, hat.

3. Bauelement nach Anspruch 2,
wobei der Winkel zwischen dem ersten und dem zweiten Teil (21, 22) im Wesentlichen 90° beträgt.

4. Bauelement nach einem der vorhergehenden Ansprüche,
wobei der Kunststoffkörper (23) eine Metallisierung (24) auf zumindest Teilbereichen seiner Außenseite aufweist.

5. Bauelement nach einem der Ansprüche 2 bis 4,
wobei eine Anschlussfläche (4) auf dem zweiten Teil (22) vorgesehen ist, die elektrisch leitend mit der Metallschicht (3) verbunden ist.

6. Bauelement nach Anspruch 5,
wobei die Anschlussfläche (4) eine Nickel-Gold-Palladium-Beschichtung umfasst.

7. Bauelement nach einem der vorhergehenden Ansprüche, wobei der Kunststoffkörper (23) ein Material aus der Gruppe Polyether-Ester-Keton und Poly-Imid umfasst.

8. Bauelement nach einem der vorhergehenden Ansprüche, wobei die Metallschicht (3) gesintertes Silber umfasst.

9. Bauelement nach einem der vorhergehenden Ansprüche, wobei die Metallschicht (3) eine bandförmige Geometrie mit einem Breite-zu-Dicke-Verhältnis größer als 6, insbesondere größer als 30, hat.

10. Bauelement nach einem der Ansprüche 4 bis 9,
wobei die Metallschicht (3) zwischen einer Sputterschicht oder einer Einbrandschicht (11) auf dem Bauelementkörper (1) und der Metallisierung (24) angeordnet ist.

11. Bauelement nach einem der vorhergehenden Ansprüche, wobei der Bauelementkörper (1) einen Kondensatorkörper mit einem Stapel von keramischen dielektrischen Schichten (9) und Innenelektroden (7, 8) umfasst.

12. Bauelement nach Anspruch 11,
wobei die dielektrischen Schichten (9) ein antiferroelektrisches Perowskit umfassen.

13. Bauelement nach einem der vorhergehenden Ansprüche, dessen Bauelementkörper (1) quaderförmig ist mit zwei winkelförmigen Anschlusselementen (2) an gegenüberliegenden Seiten des Bauelementkörpers (1).

## Claims

1. Capacitive component, comprising a component body (1) and at least one connection element (2) comprising a plastic body (23), which is connected to the component body (1) via a metal layer (3).

2. Component according to Claim 1,
wherein the plastic body (23) comprises a first part (21), which is arranged adjacently to the component body (1), and a second part (22), which extends at an angle to the first part (21).

3. Component according to Claim 2,
wherein the angle between the first and the second part (21, 22) is substantially 90°.

4. Component according to one of the preceding claims,
wherein the plastic body (23) comprises a metallization (24) on at least regions of the outer side thereof.

5. Component according to one of Claims 2 to 4,
wherein a connection surface (4) is provided on the second part (22) and is electrically conductively connected to the metal layer (3).

6. Component according to Claim 5,
wherein the connection surface (4) comprises a nickel gold palladium coating.

7. Component according to one of the preceding claims,
wherein the plastic body (23) comprises a material from the group polyether ester ketone and polyimide.

8. Component according to one of the preceding claims,
wherein the metal layer (3) comprises sintered silver.

9. Component according to one of the preceding claims,
wherein the metal layer (3) has a strip-shaped geometry with a width-to-thickness ratio greater than 6, in particular greater than 30.

10. Component according to one of Claims 4 to 9,
wherein the metal layer (3) is arranged between a sputtered layer or a baked-on layer (11) on the component body (1) and the metallization (24).

11. Component according to one of the preceding claims,
wherein the component body (1) comprises a capacitor body with a stack of ceramic dielectric layers (9) and inner electrodes (7, 8).

12. Component according to Claim 11,
wherein the dielectric layers (9) comprise an anti-ferroelectric perovskite.

13. Component according to one of the preceding claims,
of which the component body (1) is cuboidal with two angled connection elements (2) on opposite sides of the component body (1).

## Revendications

1. Composant capacitif comprenant un corps de composant (1) et au moins un élément de raccord (2) avec un corps en plastique (23) qui est connecté par le biais d'une couche métallique (3) au corps de composant (1).

2. Composant selon la revendication 1, dans lequel le corps en plastique (23) présente une première partie (21) qui est disposée à côté du corps de composant (1) et une deuxième partie (22) qui s'étend suivant un certain angle par rapport à la première partie (21).

3. Composant selon la revendication 2, dans lequel l'angle entre la première et la deuxième partie (21, 22) vaut essentiellement 90°.

4. Composant selon l'une quelconque des revendications précédentes, dans lequel le corps en plastique (23) présente une métallisation (24) sur au moins des régions partielles de son côté extérieur.

5. Composant selon l'une quelconque des revendications 2 à 4, dans lequel une surface de raccordement (4) est prévue sur la deuxième partie (22), laquelle est connectée de manière électriquement conductrice à la couche métallique (3) .

6. Composant selon la revendication 5, dans lequel la surface de raccordement (4) comprend un revêtement de nickel-or-palladium.

7. Composant selon l'une quelconque des revendications précédentes, dans lequel le corps en plastique (23) comprend un matériau parmi le groupe comprenant la polyéther-ester-cétone et le polyimide.

8. Composant selon l'une quelconque des revendications précédentes, dans lequel la couche métallique (3) comprend de l'argent fritté.

9. Composant selon l'une quelconque des revendications précédentes, dans lequel la couche métallique (3) présente une géométrie en forme de bande avec un rapport largueur-épaisseur supérieur à 6, en particulier supérieur à 30.

10. Composant selon l'une quelconque des revendications 4 à 9, dans lequel la couche métallique (3) est disposée entre une couche de pulvérisation cathodique ou une couche de pénétration (11) sur le corps de composant (1) et la métallisation (24).

11. Composant selon l'une quelconque des revendications précédentes, dans lequel le corps de composant (1) comprend un corps de condensateur avec une pile de couches diélectriques céramiques (9) et d'électrodes intérieures (7, 8).

12. Composant selon la revendication 11, dans lequel les couches diélectriques (9) comprennent de la Pérovskite anti-ferroélectrique.

13. Composant selon l'une quelconque des revendications précédentes, dont le corps de composant (1) est parallélépipédique avec deux éléments de raccord (2) en forme de coudes au niveau de côtés opposés du corps de composant (1).
